# EUROPEAN PATENT APPLICATION

(11) **EP 2 381 294 A2**
(43) Date of publication of application: **26.10.2011**
(21) Application number: 11154882.2
(22) Date of filing: 17.02.2011
(51) Int. Cl.: G02B 27/22, G02B 27/26, G02C 7/12, G02C 7/14, H04N 13/00

(54) **Stereoscopic glasses with a prism and display system including the glasses**

(30) Priority: 21.04.2010 US 326297 P; 25.06.2010 KR 20100060705
(71) Applicant: SAMSUNG ELECTRONICS CO., LTD., Suwon-si Gyeonggi-do 442-742 (KR)
(72) Inventor: KWRK, Byung-ju, Gyeonggi-do (KR)
(74) Representative: Clark, David James

(57) **Abstract**

Provided are stereoscopic glasses and a display apparatus including the same which includes a prism lens to refract light corresponding to a 3D image displayed on a display apparatus so that a scanning direction of the 3D image has orthotropia. The stereoscopic glasses (200) include: a stereoscopic glass frame (210); a lens (220) which is supported by the stereoscopic glass frame, and which provides a 3D effect by passing light corresponding to the 3D image displayed by the display apparatus; and a prism lens (230) which refracts light corresponding to the 3D image to cause a scanning direction of the 3D image to have orthotropia.

## Description

### BACKGROUND

### 1. Field

Apparatuses and methods consistent with exemplary embodiments relate to stereoscopic glasses and a display apparatus including the same, and more particularly, to stereoscopic glasses and a display apparatus including the same which includes a prism lens to refract light corresponding to a three-dimensional (3D) image displayed on the display apparatus so that a scanning direction of the 3D image has orthotropia.

### 2. Description of the Related Art

Normal human eyes have orthotropia when looking at an object with both eyes. Recent stereoscopic glasses have been manufactured based on normal human eyes having orthotropia by which both eyes look at the object together.

However, some people have strabismus such that their eyes do not look at a single object and one eye is out of focus with respect to the object. Also, some people have strabismus sometimes, e.g., in such circumstances as when one eye is blindfolded and fusion is interfered with, when tired, when waking up in the morning, when having a fever, when daydreaming, etc. In this case, extraocular muscles are excessively used to make the eye position of both eyes consistent and eyestrain becomes excessive. This causes a user to feel discomfort when viewing a 3D image.

### SUMMARY

One or more exemplary embodiments provide stereoscopic glasses and a display apparatus including the same which significantly reduces a user's eyestrain when viewing a 3D image displayed on the display apparatus. According to the present invention there is provided an apparatus and method as set forth in the appended claims. Other features of the invention will be apparent from the dependent claims, and the description which follows.

According to an aspect of an exemplary embodiment, there is provided stereoscopic glasses for viewing a 3D image displayed by a display apparatus, the stereoscopic glasses including: a stereoscopic glass frame; a lens which is supported by the stereoscopic glass frame, and which provides a 3D effect by passing light corresponding to the 3D image displayed by the display apparatus; and a prism lens which refracts light corresponding to the 3D image to cause a scanning direction of the 3D image to have orthotropia.

The prism lens may be detachably attached to the stereoscopic glass frame.

The prism lens may have a refractive index selected from among a plurality of different refractive indexes to cause the scanning direction of the 3D image to have orthotropia.

The stereoscopic glasses may further comprise a lens which corrects a user's eyesight.

The lens which corrects the user's eyesight may be integrally formed in the prism lens.

The lens may include a left eye lens and a right eye lens, which are selectively opened and closed corresponding to a 3D image displayed on the display apparatus.

The lens may have a polarizing direction corresponding to a polarizing direction of the 3D image displayed by the display apparatus.

According to an aspect of another exemplary embodiment, there is provided a display apparatus which displays a 3D image, the display apparatus including: a receiver which receives a 3D image signal; a signal processor which processes the received 3D image signal; and a display unit which displays self-diagnostic data to identify whether a scanning direction of a 3D image corresponding to the 3D image signal processed by the signal process has orthotropia.

The display apparatus may further include stereoscopic glasses including: a stereoscopic glass frame; a lens which is supported by the stereoscopic glass frame, and which provides a 3D effect by passing light corresponding to the 3D image displayed by the display apparatus; and a prism lens which refracts light corresponding to the 3D image to cause the scanning direction of the 3D image to have orthotropia.

The prism lens may have a refractive index selected, by using the self-diagnostic data displayed on the display unit, from among a plurality of different refractive indexes to cause the scanning direction of the 3D image to have orthotropia.

The prism lens may be detachably attached to the stereoscopic glass frame.

The prism lens may have a refractive index selected from among a plurality of different refractive indexes to cause the scanning direction of the 3D image to have orthotropia.

The stereoscopic glasses may further include a lens to correct a user's eyesight.

The lens may include a left eye lens and a right eye lens, which are selectively opened and closed corresponding to the 3D image displayed by the display apparatus.

The lens may have a polarizing direction corresponding to a polarizing direction of the 3D image displayed by the display apparatus.

According to an aspect of another exemplary embodiment, there is provided a display system including: a display apparatus which displays a 3D image; and stereoscopic glasses for viewing the 3D image displayed by the display apparatus, the stereoscopic glasses including: a stereoscopic glass frame, a lens which is supported by the stereoscopic glass frame, and which provides a 3D effect by passing light corresponding to the 3D image displayed by the display apparatus, and a prism lens which refracts light corresponding to the 3D image to cause a scanning direction of the 3D image to have orthotropia.

According to an aspect of another exemplary embodiment, there is provided a diagnostic method of a 3D display system, the method including: receiving, by a display apparatus, a 3D image signal; processing, by the display apparatus, the received 3D image signal; and displaying, by the display apparatus, self-diagnostic data to identify whether a scanning direction of a 3D image corresponding to the processed 3D image signal has orthotropia.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 illustrates a display system which includes a display apparatus and shutter glasses according to an exemplary embodiment;

FIG. 2 illustrates a configuration of stereoscopic glasses according to an exemplary embodiment;

FIG. 3 illustrates an operation of a prism lens of stereoscopic glasses according to an exemplary embodiment;

FIGs. 4A and 4B illustrate a detachable configuration of a prism lens according to an exemplary embodiment;

FIG. 5 is a control block diagram of a display apparatus according to an exemplary embodiment; and

FIG. 6 illustrates self-diagnostic data that is displayed on a display apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

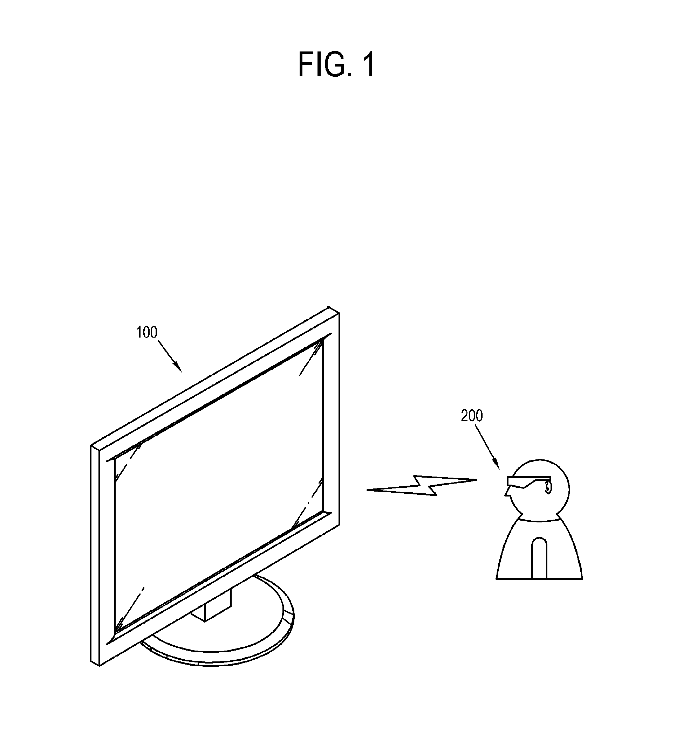

FIG. 1 illustrates a display system which includes a display apparatus 100 and stereoscopic glasses 200 according to an exemplary embodiment. As shown therein, the display system includes the display apparatus 100 which processes an image signal input from an outside and displays an image corresponding to the processed image signal thereon, and stereoscopic glasses 200 which enable a user to recognize a three-dimensional (3D) effect corresponding to the 3D image signal displayed on the display apparatus 100.

The stereoscopy of the 3D image by the display apparatus 100 and the stereoscopic glasses 200 may be conducted by using passive or active 3D technology.

For example, the passive 3D technology may be embodied by using polarizing glasses. That is, the display apparatus 100 may include a polarizing filter which provides the 3D effect by outputting a left image for the left eye and a right image for the right eye when a user wears polarizing glasses.

The active 3D technology may be embodied by using shutter glasses. In this case, the display apparatus 100 separately displays a left image and a right image and provides the 3D effect by opening a left glass for a left image and a right glass for a right image.

The display apparatus 100 receives an image signal from an external image supply source (not shown). The display apparatus 100 may receive an image signal from various image supply sources including, without limitation, a computer main body (not shown) generating an image signal with a central processing unit (CPU) (not shown) and a graphic card (not shown) and providing the image signal by a local connection, a server (not shown) providing an image signal in a network, a broadcasting transmission device (not shown) of a broadcasting station transmitting a broadcasting signal by an airwave or a cable, etc.

Upon reception of a two-dimensional (2D) image signal or a 3D image signal from the outside, the display apparatus 100 processes the 2D or 3D image signal and displays a 2D image or a 3D image accordingly.

In case of the polarizing glasses, the display apparatus 100 may separately display left and right eye images of the 3D image in a single vertical line. When a user wears the polarizing glasses which are equivalent to the filter, the user recognizes the 3D effect as only a left image is input for the left eye, and only a right image is input for the right eye.

In case of the shutter glasses, unlike a 2D image, a 3D image is divided into a left eye image corresponding to a user's left eye and a right eye image corresponding to a user's right eye. If the display apparatus 100 receives a 3D image signal, the display apparatus 100 alternately displays a left eye image and a right eye image on a frame-by-frame basis. Corresponding to the frames by which the left eye image and the right eye image are displayed, the display apparatus 100 transmits a sync signal to the stereoscopic glasses 200 to alternately open and close a left shutter and a right shutter of the stereoscopic glasses 200. If the display apparatus 100 displays thereon the 3D image, the stereoscopic glasses 200 selectively open or close the visual field for a user's left eye or right eye corresponding to whether which one of the left eye image and the right eye image is currently displayed. That is, if the display apparatus 100 displays thereon a left eye image, the stereoscopic glasses 200 open the left visual field and close the right visual field. On the contrary, if the display apparatus 100 displays thereon a right eye image, the stereoscopic glasses 200 open the right visual field and close the left visual field.

Exemplary embodiments provide stereoscopic glasses 200 and a display apparatus 100 including the same which significantly reduce eyestrain that a user suffers when viewing a 3D image displayed on the display apparatus 100.

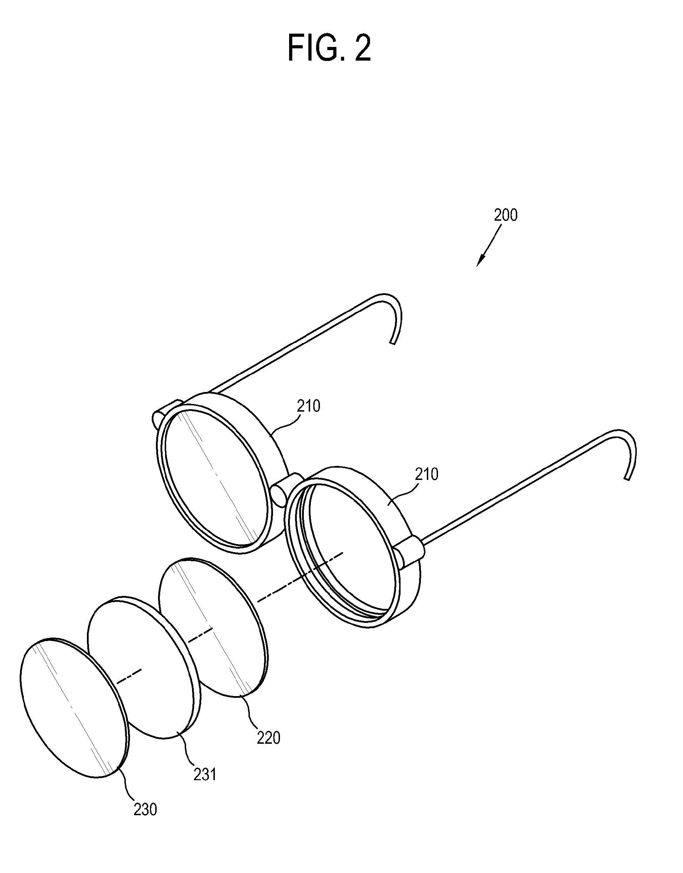

FIG. 2 illustrates a configuration of stereoscopic glasses 200 according to an exemplary embodiment. As shown therein, the stereoscopic glasses 200 include a stereoscopic glass frame 210, a lens 220, and a prism lens 230.

While the stereoscopic glass frame 210 illustrated in FIG. 2 are shaped like normal glasses, it is understood that the stereoscopic glass frame 210 may vary in shape in other exemplary embodiments. The stereoscopic glass frame 210 may be provided with the lens 220 and the prism lens 230. A groove may be formed in the frame 210 to accommodate at least one of the lens 220 and the prism lens 230 therein.

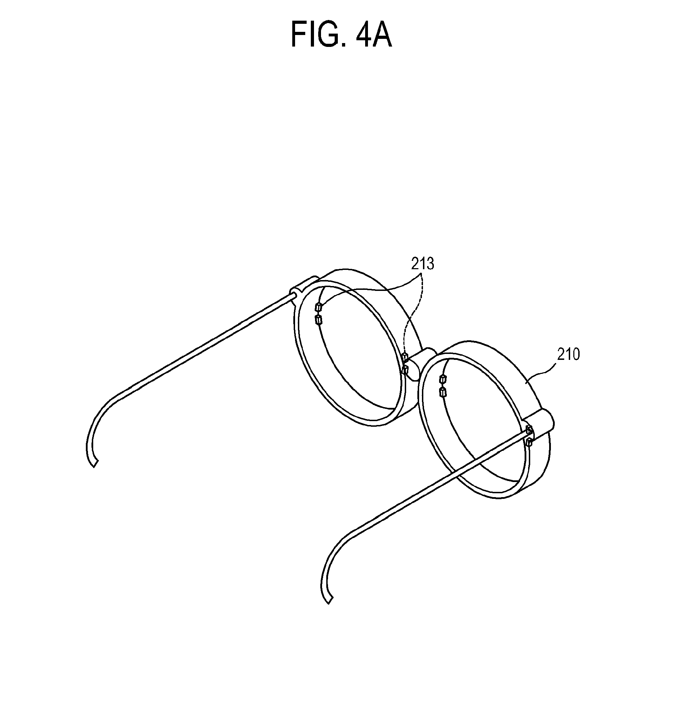

The stereoscopic glass frame 210 may include a lens supporting unit 213 (refer to FIG. 4A) to support at least one of the lens 220 and the prism lens 230, which will be described in more detail below.

The lens 220 is supported by the stereoscopic glass frame 210. Light penetrates the lens 220 corresponding to the 3D image displayed on the display apparatus 100 such that a user recognizes the 3D effect. That is, the lens 220 allows a user to recognize the 3D effect. Thus, the lens 220 is provided corresponding to the method of displaying a 3D image by the display apparatus 100.

If the display apparatus 100 displays a 3D image for viewing by polarizing glasses, the lens 220 includes a lens which has a polarizing direction corresponding to a polarizing direction of light corresponding to the 3D image displayed on the display apparatus 100.

If a display apparatus 100 displays a 3D image for viewing by shutter glasses, the lens 220 includes a left eye lens and a right eye lens, which are selectively opened and closed corresponding to the 3D image displayed on the display apparatus 100. That is, if the display apparatus 100 displays thereon a 3D image, the shutter glasses selectively open or close a user's left visual field or right visual field corresponding to which one of the left eye image and the right eye image is currently displayed. If the display apparatus 100 displays thereon a left eye image, the lens 220 opens the left visual field and closes the right visual field. On the contrary, if the display apparatus 100 displays thereon a right eye image, the lens 220 opens the right visual field and closes the left visual field.

If the stereoscopic glasses 200 include shutter glasses, they may include a communication unit (not shown) communicating with the display apparatus 100 and receiving a shutter control signal therefrom, and a shutter controller (not shown) selectively opening and closing the lens 220 based on the received shutter control signal.

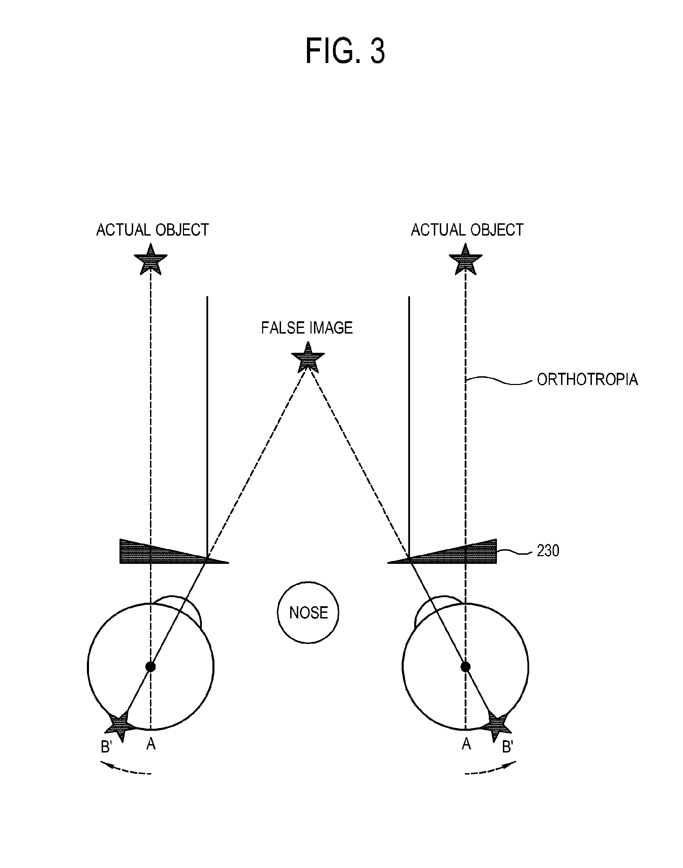

The prism lens 230 refracts light corresponding to the 3D image so that a scanning direction of the 3D image displayed on the display apparatus 100 has orthotropia. This will be described in more detail with reference to FIG. 3.

FIG. 3 illustrates an operation of a prism lens 230 of stereoscopic glasses 200 according to an exemplary embodiment. Normal human eyes have orthotropia for the direction where an object exists. However, depending on personal characteristics, occupation, etc., the eyes have phoria. The phoria may be classified into esophoria inclined to the nose, exophoria inclined to the ear, hyperphoria inclined to the forehead, and hypophoria inclined to the jaw depending on the inclination direction of the eyeball. People who have phoria excessively use extraocular muscles to have orthotropia and therefore may suffer from fatigue, ophthalmalgia, or headaches.

The prism lens 230 may include a meniscus prism which has two spherical surfaces, though it is understood that another exemplary embodiment is not limited thereto. For example, according to another exemplary embodiment, any of various prism lenses, such as a Fresnel lens, may be used. The prism lens 230 includes an apex angle and a base, and arranges the apex angle of the prism toward the direction where the eyes are inclined.

As shown therein, the eye positions of normal eyes have orthotropia with respect to an object. However, the eyes which have esophoria, as shown in FIG. 3, do not look at the object, but look at a false image. To look at the object, the eyes excessively use the extraocular muscles and suffer eyestrain. If the apex angle of the prism lens 230 is directed to the nose to correct the esophoria, the prism lens 230 refracts light such that a person with phoria may look at the object without suffering eyestrain.

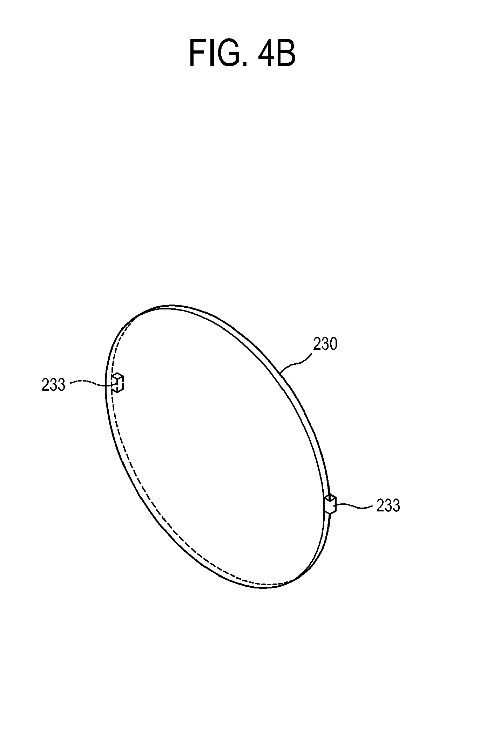

The prism lens 230 may be detachably attached to the stereoscopic glass frame 210, which will be described in more detail with reference to FIGs. 4A and 4B.

FIGs. 4A and 4B illustrate a detachable configuration of a prism lens 230 according to an exemplary embodiment.

FIG. 4A illustrates a lens supporting unit 213 of the stereoscopic glass frame 210. The lens supporting unit 213 supports at least one of the lens 220 and the prism lens 230. FIG. 4A illustrates the lens supporting unit 213 in the stereoscopic glass frame 210 and accommodating a projection therein, though it is understood that a shape of the lens supporting unit 213 is not limited to that illustrated in FIG. 4A. For example, according to another exemplary embodiment, the lens supporting unit 213 may be outside of the stereoscopic glass frame 220 and have any of other various shapes that are capable of supporting at least one of the lens 230 and the prism lens 230.

FIG. 4B illustrates the prism lens 230 according to the present exemplary embodiment. Referring to FIG. 4B, the prism lens 230 may include a supported part 233 which is supported by the lens supporting unit 213 of the stereoscopic glass frame 210. The supported part 233 may be provided in the prism lens 230 corresponding to the position and shape of the lens supporting unit 213.

The prism lens 230 may be detachably attached to the stereoscopic glass frame 210 by the lens supporting unit 213 of the stereoscopic glass frame 210 and the supported part 233 of the prism lens 230.

Normal human eyes which have orthotropia do not require the prism lens 230. In this case, a user may use the stereoscopic glasses 200 without the prism lens 230.

The prism lens 230 may have a refractive index among those which make the scanning direction of the 3D image have orthotropia. That is, the prism lens 230 may be from among a plurality of prism lenses which have different refractive indexes that cause the scanning direction of the 3D image to have orthotropia. The prism lens 230 is detachably attached to the stereoscopic glass frame 210, and a user who has phoria may replace the prism lens 230 with another prism lens having a refractive index appropriate for the user's phoria. Therefore, according to the present exemplary embodiment, customized stereoscopic glasses 200 may be provided.

The stereoscopic glasses 200 according to the present exemplary embodiment may further include a lens 231 which corrects a user's eyesight. For example, the lens which corrects the eyesight may correct a user's myopia or astigmatism. Furthermore, the lens which corrects the eyesight may be integrally formed in the prism lens 230.

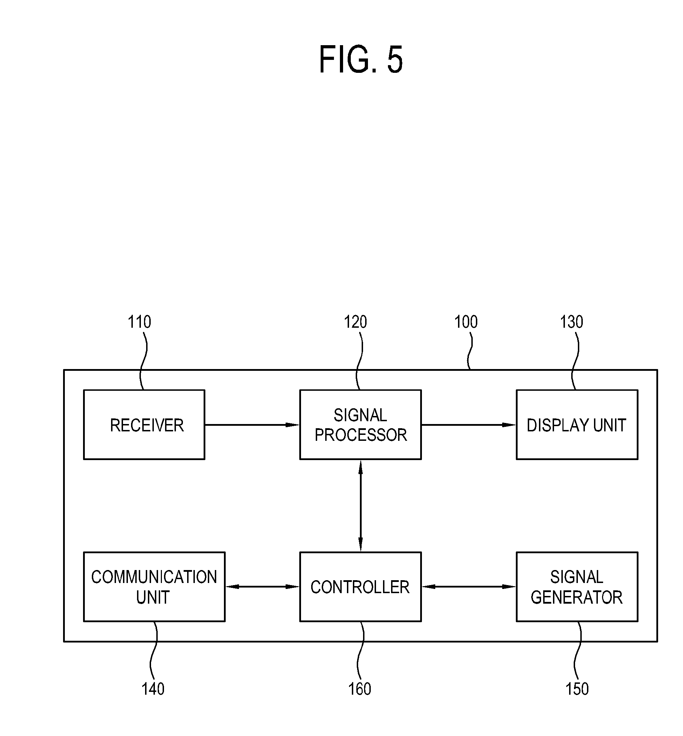

FIG. 5 is a control block diagram of a display apparatus 100 according to an exemplary embodiment. As shown therein, the display apparatus 100 includes a receiver 110, a signal processor 120 and a display unit 130.

The receiver 110 receives an image signal from an outside and transmits the received image signal to the signal processor 120. The receiver 110 may vary corresponding to a standard of the received image signal and a type of the display apparatus 100. The image signal may include a 2D image signal or a 3D image signal, and may further include an audio signal or a data signal.

For example, if the display apparatus 100 includes a television (TV), the receiver 110 may receive a radio frequency (RF) signal in a wireless manner from a broadcasting receiving device, or other image signals in compliance with a standard for composite video, component video, super video, SCART, high definition multimedia interface (HDMI), etc. The receiver 110 may further include at least one of an antenna (not shown) and a tuner (not shown) to tune a broadcasting channel.

For example, if the display apparatus 100 includes a personal computer (PC) monitor, the receiver 110 may comply with D-SUB to transmit an RGB signal according to VGA, DVI-A according to digital video interactive (DVI) standard, integrated digital/analog (DVI-I), DVI-D, HDMI standard, etc. The receiver 110 may include a display port, unified display interface (UDI), a wireless HD, etc.

The signal processor 120 processes the image signal received through the receiver 110 and displays on the display unit 120 an image corresponding to the processed image signal. The signal processor 120 may perform various image processing operations with respect to the image signal. The image processing operations may include, without limitation, at least one of decoding/encoding, deinterlacing, converting frame fresh rate, scaling, noise reduction for improvement of a picture quality, detail enhancement, line scanning corresponding to various image formats, etc. The signal processor 120 may individually or collectively perform the foregoing operations.

The signal processor 120 may process the image signal as a plurality of horizontal scanning lines by frame, and scans the image signal to the display unit 130. In this case, the signal processor 120 may scan the image from a top to a bottom of a display area of the display unit 130. If scanning a single frame is completed, the signal processor 120 scans an image of a next frame after the preset non-scanning time.

According to an exemplary embodiment, if the display apparatus 100 displays a 3D image for viewing by polarizing glasses, the signal processor 120 may alternately scan to the display unit 130 the image signal on a horizontal basis corresponding to a left eye image and a right eye image from a plurality of horizontal scanning lines upon reception of an image signal corresponding to a 3D image from the receiver 110.

According to another exemplary embodiment, if the display apparatus 100 displays a 3D image for viewing by shutter glasses, the signal processor 120 scans to the display unit 130 an image signal sequentially and alternately corresponding to a left eye image and a right eye image of an image signal corresponding to a 3D image received through the receiver 110. Accordingly, the left eye image and the right eye image are alternately displayed on the display unit 130 during the non-scanning time. In this case, the display apparatus 100 may further include a communication unit 140 to communicate with the shutter glasses, a signal generator 150 to generate a sync signal with respect to the left eye image and the right eye image, and a controller 160 to control the foregoing elements. The sync signal generated by the signal generator 150 is transmitted to the shutter glasses through the communication unit 140 by the control of the controller 160 such that the shutter glasses alternately open and close the lens 220 corresponding to the sync signal.

The signal processor 120 may process an audio signal transmitted together with the image signal from the receiver 110. The signal processor 120 performs one or more preset audio processing operations on the audio signal. The audio processing operations may include, without limitation, at least one of analog/digital conversion, amplification of audio signal, adjustment of output level of audio signal, adjustment of audio signal frequency, etc. The audio processing operations may be individually or collectively performed.

The display unit 130 displays thereon an image corresponding to the image signal processed by the signal processor 120. For example, the display unit 130 may display a single image frame by vertically arranging a plurality of horizontal scanning lines scanned by the signal processor 120. The display unit 130 may include a display panel (not shown) to display an image thereon. The display panel may include a liquid crystal display (LCD) panel including a liquid crystal layer, an organic light emitting diode (OLED) including an organic light emitting layer, a plasma display panel (PDP), etc.

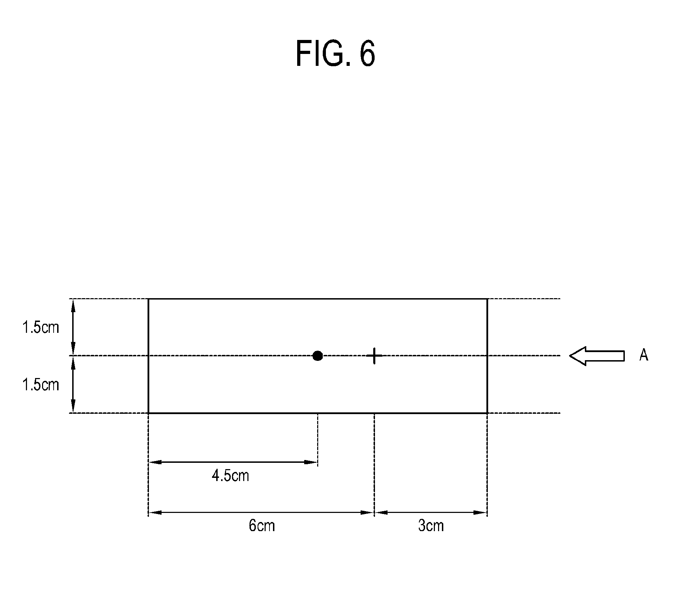

Furthermore, the display unit 130 may display thereon self-diagnostic data to identify whether the scanning direction of the 3D image corresponding to the processed 3D image signal have orthotropia. This will be described in more detail with reference to FIG. 6.

FIG. 6 illustrates an example of self-diagnostic data which is displayed by a display apparatus 100 according to an exemplary embodiment.

As described above with reference to FIG. 4, the prism lens 230 of the stereoscopic glasses 200 according to an exemplary embodiment is designed to be replaceable according to a corresponding eye condition.

Accordingly, the display apparatus 100 according to the present exemplary embodiment displays thereon the self-diagnostic data to examine the eye condition of a person using the stereoscopic glasses, and allows a user to select a prism lens 230 having an appropriate refractive index.

FIG. 6 illustrates the self-diagnostic data for the normal eye having orthotropia for an object. A is a reference line and "." and "+" are located on the line A and spaced from each other at a preset interval.

Depending on the eye condition, "." and "+" may be located above or below the line A or spaced farther than or closer than the preset interval. In this case, a user may select a prism lens which has a refractive index that causes " . " and "+" to be located in the line A and spaced from each other at the preset interval among prism lenses having a plurality of refractive indexes. Then, a user may view the 3D image displayed on the display apparatus 100 without suffering eyestrain.

The display apparatus 100 according to the present exemplary embodiment of the present invention may further include a user input unit (not shown) to receive a user's input. The user input unit may include at least one of a predetermined character key input unit (not shown), a predetermined number key input unit (not shown), a channel up/down key (not shown), a volume adjustment key (not shown), etc. If a specific key of the user input unit is pressed for an input, the self-diagnostic data may be displayed on the display unit 130.

The user input unit may be provided as a button on the display unit 30, a touch panel of a display panel (not shown) of the display unit 30, a keyboard or a remote controller which is connected to the display apparatus in wireless/wired manner, or other various types that can receive a user's input.

As described above, stereoscopic glasses and a display apparatus including the same according to exemplary embodiments significantly reduces a user's eyestrain when the user views a 3D image displayed on the display apparatus.

While not restricted thereto, it is understood that one or more exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Furthermore, it is understood that one or more units of the display apparatus 100 can include a processor or microprocessor executing a computer program stored in a computer-readable medium.

Although a few preferred embodiments have been shown and described, it will be appreciated by those skilled in the art that various changes and modifications might be made without departing from the scope of the invention, as defined in the appended claims. Attention is directed to all papers and documents which are filed concurrently with or previous to this specification in connection with this application and which are open to public inspection with this specification, and the contents of all such papers and documents are incorporated herein by reference. All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

**1.** Stereoscopic glasses for viewing a three-dimensional (3D) image displayed by a display apparatus, the stereoscopic glasses comprising:
a stereoscopic glass frame;
a lens which is supported by the stereoscopic glass frame, and which provides a 3D effect by passing light corresponding to the 3D image displayed by the display apparatus; and
a prism lens which refracts light corresponding to the 3D image to cause a scanning direction of the 3D image to have orthotropia.

**2.** The stereoscopic glasses according to claim 1, wherein the prism lens is detachably attached to the stereoscopic glass frame.

**3.** The stereoscopic glasses according to claim 2, wherein the prism lens has a refractive index selected from among a plurality of different refractive indexes to cause the scanning direction of the 3D image to have orthotropia.

**4.** The stereoscopic glasses according to claim 1, further comprising a lens which corrects a user's eyesight.

**5.** The stereoscopic glasses according to claim 4, wherein the lens which corrects the user's eyesight is integrally formed in the prism lens.

**6.** The stereoscopic glasses according to claim 1, wherein the lens comprises a left eye lens and a right eye lens, which are selectively opened and closed corresponding to the 3D image displayed by the display apparatus.

**7.** The stereoscopic glasses according to claim 1, wherein the lens has a polarizing direction corresponding to a polarizing direction of the 3D image displayed by the display apparatus.

**8.** A display system comprising:
a display apparatus which displays a 3D image, the display apparatus comprising:
a receiver which receives a 3D image signal;
a signal processor which processes the received 3D image signal; and
a display unit which displays self-diagnostic data to identify whether a scanning direction of a 3D image corresponding to the processed 3D image signal has orthotropia.

**9.** The display system according to claim 8, further comprising stereoscopic glasses for viewing the 3D image, the stereoscopic glasses comprising:
a stereoscopic glass frame;
a lens which is supported by the stereoscopic glass frame, and which provides a 3D effect by passing light corresponding to the 3D image displayed by the display apparatus; and
a prism lens which refracts light corresponding to the 3D image to cause the scanning direction of the 3D image to have orthotropia.

**10.** The display system according to claim 9, wherein the prism lens has a refractive index selected from among a plurality of different refractive indexes to cause the scanning direction of the 3D image to have orthotropia according to the displayed self-diagnostic data.

**11.** The display system according to claim 10, wherein the prism lens is detachably attached to the stereoscopic glass frame.

**13.** The display system according to claim 11, wherein the prism lens has a refractive index selected from among a plurality of different refractive indexes to cause the scanning direction of the 3D image to have orthotropia.

**14.** The display system according to claim 9, wherein the stereoscopic glasses further comprise a lens which corrects a user's eyesight.

**15.** The display system according to claim 9, wherein the lens comprises a left eye lens and a right eye lens, which are selectively opened and closed corresponding to the 3D image displayed by the display apparatus.
